Europäisches Patentamt

European Patent Office

Office européen des brevets

(19)

(11) Veröffentlichungsnummer: **0 189 874**
**B1**

(12) **EUROPÄISCHE PATENTSCHRIFT**

(45) Veröffentlichungstag der Patentschrift :
07.03.90

(21) Anmeldenummer : 86100995.9

(22) Anmeldetag : 24.01.86

(51) Int. Cl.⁵ : **F 01 P 1/02**, F 02 F 1/06,
F 02 G 5/00, B 60 H 1/16

(54) Luftgekühlte Brennkraftmaschine.

(30) Priorität : 26.01.85 DE 3502668

(43) Veröffentlichungstag der Anmeldung :
06.08.86 Patentblatt 86/32

(45) Bekanntmachung des Hinweises auf die Patenterteilung : 07.03.90 Patentblatt 90/10

(84) Benannte Vertragsstaaten :
DE FR GB IT

(56) Entgegenhaltungen :
AT--B-- 186 911
BE--A-- 438 281
DE--A-- 2 027 549
DE--A-- 2 530 748
DE--A-- 3 045 629
DE--B-- 1 109 450
FR--A-- 1 287 933
FR--A-- 2 417 015
GB--A-- 430 274
US--A-- 2 439 898

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Roggendorff, Martin
Aachener Strasse 9
D-5000 Köln 90 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine luftgekühlte Brennkraftmaschine gemäß Oberbegriff des Anspruchs 1.

Es ist bei luftgekühlten Brennkraftmaschinen bekannt, die zur Brennkraftmaschinenkühlung benötigte Kühlluft zu Heizzwecken zu benutzen, nachdem sie sich durch das Vorbeiströmen am Zylinderrohr und am Zylinderkopf erwärmt hat. Als Beispiel für eine derartige Ausnutzung der erwärmten Kühlluft sei der Lloyd-Zweizylinder-Viertakt-Motor mit 600 m³ Hubraum und 19 PS Leistung genannt. Bei einer derartig zu Heizzwecken benutzten Kühlluft tritt aber häufig der Mangel einer Verunreinigung der Heizluft durch in die erwärmte Kühlluft gelangende Ölnebel und Abgase auf. Diese Verunreinigungen treten insbesondere durch undichte Zylinderkopfdichtungen in den Kühlluftstrom ein.

Aus der gattungsbildenden DE-B 11 09 450 ist es bekannt, unterhalb der Teilungsebene von Zylinderkopf und Zylinderrohr eine Zwischenwand anzuordnen, um die zu Heizzwecken benutzte Kühlluft von der übrigen Kühlluft zu trennen. Dabei ist die Zwischenwand aber nicht vollkommen dicht, so daß zusätzlich unterschiedlich ausgelegte Gebläse für verschiedene Drücke der beiden Kühlluftströme sorgen müssen. Eine derartige Ausbildung ist aber sehr bauaufwendig und zudem auch störanfällig.

Die FR-A 12 87 933 beschreibt eine Zylinderkopfdichtung für eine luftgekühlte Brennkraftmaschine, an die eine Kühlrippe angeformt sein kann. Von einer Trennung von zwei Kühlluftströmen ist keine Rede.

Aufgabe der vorliegenden Erfindung ist es, mit einfachen Mitteln eine Vorrichtung zu schaffen, die es ermöglicht, die an den Zylindern einer Brennkraftmaschine vorbeiströmende Kühlluft direkt und ohne durch eine undichte Zylinderkopfdichtung verursachte Verunreinigungen durch Brennkraftmaschinenabgase dem Fahrerraum zu Heizzwecken zuzuleiten.

Diese Aufgabe wird erfindungsgemäß bei einem Gegenstand nach Anspruch 1, erster Teil durch das kennzeichnende Merkmale des ersten Anspruchs gelöst. Dadurch, daß zwischen dem Zylinderkopf und dem Zylinderrohr jeder Zylindereinheit eine Zwischenwand angeordnet ist, die die an dem Zylinderrohr vorbeigeführte Kühlluft gasdicht von der übrigen Kühlluft trennt, kann die von den Zylinderrohren erwärmte Kühlluft ohne Verunreinigungen auch in dem Fall einer Leckstelle zwischen Zylinderkopf und Zylinderrohr direkt dem Fahrerraum zu Heizzwecken zugeführt werden. Damit die Zwischenwand einfach gegenüber dem Zylinderkopf bzw. dem Zylinderrohr abzudichten ist, ist sie mit einer Ausnehmung versehen, die der Außenkontur des mit ihr zusammenwirkenden Zylinderrohres im Bereich der Verbindung zwischen Zylinderkopf und Zylinderrohr entspricht. Somit kann die Zwischenwand soweit auf das Zylinderrohr aufgeschoben werden, bis sie sich auf der obersten Kühlrippe des Zylinderrohres abstützt. Um nun eine vollkommen gasdichte Abdichtung im Bereich der Ausnehmung zu erhalten, ist auf die Zwischenwand oder die oberste Kühlrippe eine gummielastische Dichtung aufgebracht, die mit der entsprechenden Kühlrippe bzw. mit der Zwischenwand eine an jeder Stelle dichte Verbindung eingeht.

Nach weiteren Ausbildungen der Erfindung ist es vorteilhaft, zwischen die Zylinderrohre und Zylinderköpfe einer Mehrzylinderreihen-Brennkraftmaschine eine zusammenhängende Zwischenwand einzusetzen. Dabei ist diese Zwischenwand vorteilhaft aus einem metallischen Werkstoff wie z. B. Blech gefertigt. Die gummielastische Dichtung hat im übrigen im unbelasteten Zustand einen halbkreisförmigen Querschnitt. Auf die Zuganker, mit denen der Zylinderkopf und das Zylinderrohr auf dem Kurbelgehäuse verspannt werden, werden Dichtelemente so aufgeschoben, daß sie den Bereich von Einbuchtungen für die Zugankerdurchführungen in der Zwischenwand gegenüber dem Zylinderkopf abdichten. Es ist auch vorteilhaft, die Dichtelemente in Form von « Kabeldurchführungsdichtungen » auf die Einbuchtungen der Zwischenwand aufzuschieben. Bei einer derartigen Ausführung ergibt sich der Vorteil, daß bei derartig fertig vormontierten Zwischenwänden keine Dichtelemente bei der Montage von Zylinderkopf und Rohr vergessen werden. Weiterhin erstreckt sich die Zwischenwand über die in etwa rechtwinklig zu ihr stehenden, die Zylinderrohre umgebenden, Kühlluftleitbleche hinaus. Somit ist sichergestellt, daß die bei einer Leckage zwischen Zylinderkopf und Zylinderrohr entweichenden Abgase nicht in den zu Heizzwecken benutzten Kühlluftstrom gelangen können.

Ein Ausführungsbeispiel der Erfindung ist in der Zeichnung dargestellt.

Fig. 1 zeigt einen Ausschnittsquerschnitt von Zylinderköpfen und Zylinderrohren mit einer eingebauten Zwischenwand,

Fig. 2 zeigt eine Draufsicht auf die Zwischenwand gemäß Fig. 1,

Fig. 3 zeigt einen Schnitt durch die Zwischenwand nach Fig. 2 gemäß dem Schnitt A-A.

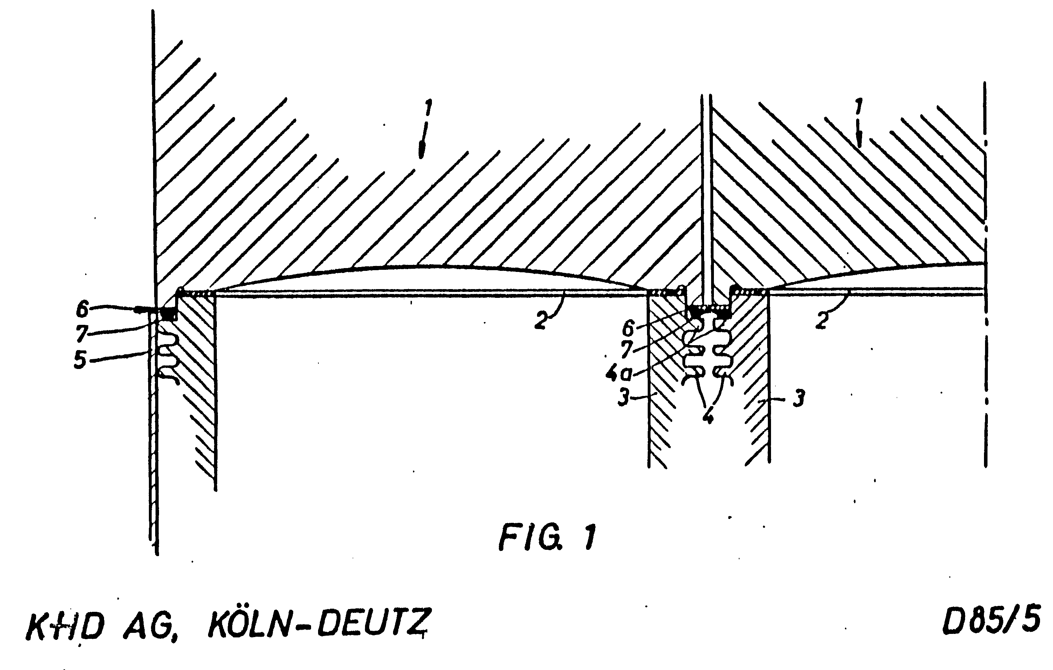

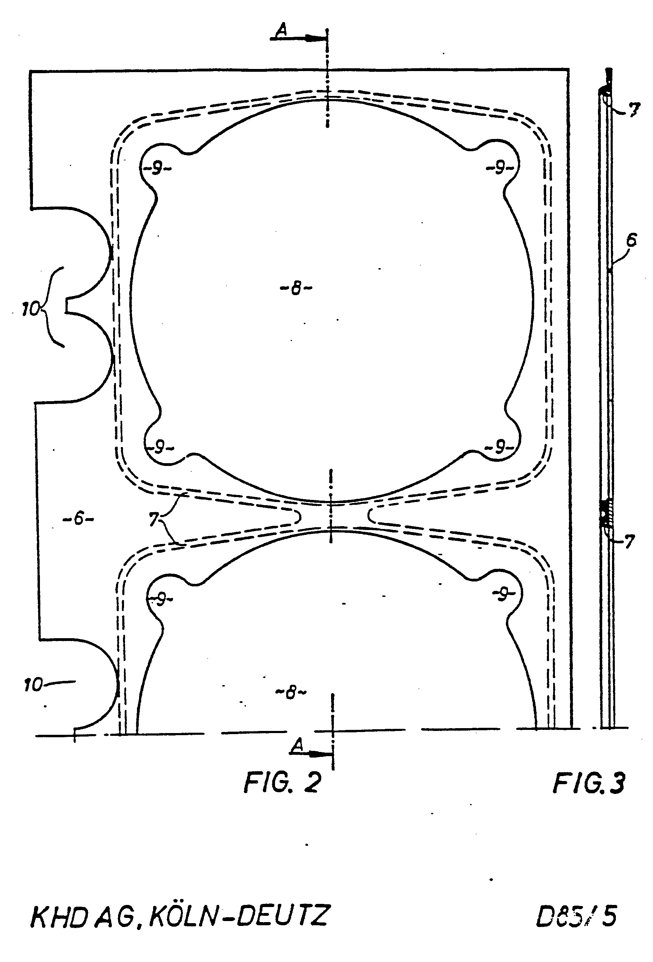

In Fig. 1 sind schematisch Zylinderköpfe 1 dargestellt, die unter Zwischenfügung von Zylinderkopfdichtungen 2 Zylinderrohre 3 abdecken. Die Zylinderrohre 3 sind mit Kühlrippen 4 versehen. Desweiteren sind die Zylinderrohre 3 von einem Luftleitblech 5 umgeben. In die Teilungsebene zwischen den Zylinderköpfen 1 und den Zylinderrohren 3 ist eine Zwischenwand 6 eingefügt. Die Zwischenwand 6 ist mit Ausnehmungen 8 versehen, die der Außenkontur jedes Zylinderrohrs 3 im Bereich der Flanschverbindung mit den entsprechenden Zylinderköpfen 1 entsprechen. Somit wird die Zwischenwand 6 über den Flanschbereich des jeweiligen Zylinderrohres 3 soweit aufgeschoben, bis sie auf der obersten Kühlrippe 4a aufliegt. Um eine gasdichte Verbindung von Zwischenwand 6 und Zylinderrohr 3 zu erhalten, ist auf die Zwischenwand 6 eine gummielastische Dichtung 7 aufvulkanisiert. Diese erstreckt sich, wie der Fig. 2 zu entnehmen ist, etwa quadratisch um die Ausnehmung 8. Die gummielastische Dichtung 7 wirkt über den ganzen Umfang eines Zylinderrohres 3 mit dessen oberster Kühlrippe 4a zusammen. Darüberhinaus ist die Dicke der gummielastischen Dichtung 7 so bemessen, daß unter allen Betriebsbedingungen der Brennkraftmaschine ein fester Sitz der Zwischenwand 6 zwischen Zylinderkopf 1 und Zylinderrohr 3 gewährleistet ist. Weiterhin ragt die Zwischenwand 6 über das im rechten Winkel zu ihr stehende Luftleitblech 5 hinaus. Somit ist sichergestellt, daß im Falle eines Undichtwerdens der Zylinderkopfdichtung die dem Brennraum entweichenden Abgase sich nicht mit der die Zylinderrohre 3 umströmenden Kühlluft vermischen können.

Abb. 2 zeigt eine Draufsicht auf die Zwischenwand 6 gemäß Fig. 1. Die Zwischenwand 6 hat eine im wesentlichen rechteckige Form, die von außen nur durch Einbuchtungen 10 unterbrochen wird. Durch diese Einbuchtungen 10 werden die Stößelrohre geführt. Weiterhin sind im Rand der Ausnehmung 8 zusätzliche Einbuchtungen 9 vorgesehen. Durch diese Einbuchtungen 9 werden gegenüber der Zwischenwand abgedichtete Zuganker, die den Zylinderkopf 1 und das Zylinderrohr 3 mit dem Brennkraftmaschinenkurbelgehäuse verbinden, durchgeführt. Die auf die Zwischenwand 6 aufvulkanisierten gummielastischen Dichtungen 7 zweier nebeneinanderliegender Zylindereinheiten sind im Bereich zwischen den Zylinderrohren 3 miteinander verbunden, wie auch aus Fig. 3 zu ersehen ist.

**Patentansprüche**

1. Luftgekühlte Brennkraftmaschine, bei der die an Zylinderrohren (3) vorbeiströmende und sich erwärmende Kühlluft zu Heizzwecken in einen Fahrerraum einleitbar ist, mit Zylinderköpfen, die unter Zwischenfügung von Zylinderkopfdichtungen (2) Zylinderrohre abdecken, wobei die unterhalb der Teilungsebene von Zylinderkopf (1) und Zylinderrohr (3) am Zylinderrohr (3) vorbeigeführte Kühlluft durch eine in der Teilungsebene angeordnete Zwischenwand (6) von der übrigen Kühlluft getrennt dem Fahrerraum zuführbar ist, dadurch gekennzeichnet, daß die Zwischenwand (6) mit einer Ausnehmung (8) für jedes Zylinderrohr (3) versehen ist, die der Außenkontur des mit ihr zusammenwirkenden Zylinderrohres (3) im Bereich der Flanschverbindung zum Zylinderkopf (1) derart entspricht, daß die Zwischenwand (6) bis zu einer obersten Kühlrippe (4a) auf das Zylinderrohr (3) aufschiebbar ist, wobei entweder auf die Zwischenwand (6) eine gummielastische Dichtung (7) aufvulkanisiert ist, die über den gesamten Umfang des Zylinderrohres (3) mit dessen oberster Kühlrippe (4a) zusammenwirkt oder auf die oberste Kühlrippe (4a) jedes Zylinderrohres (3) über dessen gesamten Umfang eine gummielastische Dichtung (7) aufvulkanisiert ist, die mit der Zwischenwand (6) zusammenwirkt.

2. Luftgekühlte Brennkraftmaschine nach Anspruch 1, mit zumindest einer Reihe von Zylindern, dadurch gekennzeichnet, daß zwischen die Zylinderrohre (3) und Zylinderköpfe (1) einer Reihe eine gemeinsame Zwischenwand (6) eingebaut ist.

3. Luftgekühlte Brennkraftmaschine nach Anspruch 1 oder 2, dadurch gekennzeichnet, daß die Zwischenwand (6) aus einem metallischen Werkstoff gefertigt ist.

4. Luftgekühlte Brennkraftmaschine nach einem der Ansprüche 1 bis 3, dadurch gekennzeichnet, daß die Zwischenwand (6) sich über ein jedes Zylinderrohr (3) umgebendes Luftleitblech (5) im Bereich der Abschlußkante zum jeweiligen Zylinderkopf (1) hinaus erstreckt.

5. Luftgekühlte Brennkraftmaschine nach einem der Ansprüche 1 bis 4, dadurch gekennzeichnet, daß die gummielastische Dichtung (7) im unbelasteten Zustand einen halbkreisförmigen Querschnitt hat.

6. Luftgekühlte Brennkaftmaschine nach einem der Ansprüche 1 bis 5, dadurch gekennzeichnet, daß die gummielastische Dichtung (7) die Zwischenwand (6) bzw. die oberste Kühlrippe (4a) jedes Zylinderrohres (3) in einer etwa quadratischen Umschlingung umgibt.

7. Luftgekühlte Brennkraftmaschine nach einem der Ansprüche 1 bis 6, dadurch gekennzeichnet, daß Einbuchtungen (9) in jeder Ausnehmung (8) zur Zugankerdurchführung eingearbeitet sind, und daß die Zuganker gegenüber den Einbuchtungen (9) mit Dichtelementen abdichtbar sind.

**Claims**

1. An air-cooled internal combustion engine in which the cooling air which heats up as it flows past the cylinder tubes (3) is adapted to be conveyed for heating purposes into a driver's compartment, the engine comprising cylinder heads which, with the interposition of seals (2), cover cylinder tubes, the cooling air conveyed past the cylinder tube (3) and underneath the plane of division between the cylinder head (1) and the cylinder tube (3) being adapted for supplying to the driver's compartment separately from the remaining cooling air and through an intermediate wall (6) disposed in the plane of division, characterised in that the intermediate wall (6) is formed with a recess (8) for each cylinder tube (3), and near the flange connection to the cylinder head (1) the recess corresponds to the outer contour of the cylinder tube (3) cooperating therewith so that the intermediate wall (6) can be slid up the cylinder tube (3) as far as its top cooling rib (4a) and either an elastomeric seal (7) is vulcanised to the intermediate wall (6) and cooperates with the top cooling rib (4a) over the entire periphery of the cylinder tube (3), or an elastomeric seal (7) is vulcanised on the top cooling rib (4a) of each cylinder tube (3) over the entire periphery thereof and cooperates with the cylinder wall (6).

2. An air-cooled internal combustion engine according to claim 1, comprising at least one row of cylinders, characterised in that a common intermediate wall (6) is incorporated between the cylinder tubes (3) and cylinder heads (1) in a row.

3. An air-cooled internal combustion engine according to claim 1 or 2, characterised in that the intermediate wall (6) is made from a metal material.

4. An air-cooled internal combustion engine according to any of claims 1 to 3, characterised in that the intermediate wall (6) extends in the terminal-edge region to the respective cylinder head (1) via a cooling baffle (5) surrounding each cylinder tube (3).

5. An air-cooled internal combustion engine according to any of claims 1 to 4, characterised in that the elastomeric seal (7) has a semicircular cross-section when unloaded.

6. An air-cooled internal combustion engine according to any of claims 1 to 5, characterised in that the elastomeric seal (7) surrounds the intermediate wall (6) or the top cooling rib (4a) of each cylinder tube (3) in a substantially square loop.

7. An air-cooled internal combustion engine according to any of claims 1 to 6, characterised in that bays (9) are formed in each recess (8) for leading through the tie rods, and the tie rods are adapted to be sealed off from the bays (9) by sealing elements.

## Revendications

1. Moteur à combustion interne à refroidissement par air, selon lequel l'air de refroidissement s'écoulant d'abord sur les jupes de cylindre (3) et se réchauffant peut être admis en vue du chauffage dans l'habitacle du conducteur, qui recouvrent par une jonction intermédiaire des joints de culasse du plan de séparation de la culasse (1) sur la jupe de cylindre (3) à travers une cloison intermédiaire (6) placée dans le plan de séparation, cet air est séparé de l'air de refroidissement habituel et peut être admis dans l'habitacle du conducteur, caractérisé en ce que la cloison intermédiaire (6) est munie d'une cavité (8) pour chaque jupe de cylindre (3) qui correspond au contour extérieur de la jupe de cylindre (3) coopérant avec lui dans la zone de la liaison à bride vers la culasse (1), de telle sorte que la cloison intermédiaire (6) soit déplaçable jusqu'à une ailette de refroidissement supérieure (4a) sur la jupe de cylindre (3), où soit vulcanisé in situ sur la cloison intermédiaire (6) un joint élastomère (7), qui coopère avec l'ailette de refroidissement supérieure (4a) soit on vulcanise in situ sur l'ailette de refroidissement supérieure (4a) de chaque jupe de cylindre (3) sur la totalité de sa périphérie, un joint élastomère (7), qui coopère avec la cloison intermédiaire (6).

2. Moteur à combustion interne à refroidissement par air selon la revendication 1, avec au moins une série de cylindres, caractérisé en ce qu'entre les jupes de cylindre (3) et les culasses (1) d'une série est disposée une cloison intermédiaire commune (6).

3. Moteur à combustion interne à refroidissement par air selon revendication 1 ou 2, caractérisé en ce que la cloison intermédiaire (6) est fabriquée dans un matériau métallique.

4. Moteur à combustion interne selon l'une des revendications 1 à 3, caractérisé en ce que la cloison intermédiaire s'étend vers l'extérieur par une tôle de déflexion d'air entourant chaque jupe de cylindre (3) dans la zone de la bordure vers chaque culasse (1).

5. Moteur à combustion interne à refroidissement par air selon l'une des revendications 1 à 4, caractérisé en ce que le joint élastomère (7) à l'état non chargé présente une section hémisphérique.

6. Moteur à combustion interne à refroidissement par air selon l'une des revendications 1 à 5, caractérisé en ce que le joint élastomère (7) entoure la cloison intermédiaire (6) ou l'ailette de refroidissement supérieure (4a) de chaque jupe de cylindre (3) dans un entourage à peu près parabolique.

7. Moteur à combustion interne à refroidissement par air selon l'une des revendications 1 à 6, caractérisé en ce que des passages (9) sont pratiqués dans chaque cavité (8) pour la traversée des tirants d'ancrage et en ce que ces tirants d'ancrage sont rendus étanches vis-à-vis des passages par des joints d'étanchéité.

FIG 1

D 85/5

KHD AG, KÖLN-DEUTZ

FIG. 2

FIG. 3

KHD AG, KÖLN-DEUTZ

D85/5